**Europäisches Patentamt**

**European Patent Office**

**Office européen des brevets**

(19)

(11) Veröffentlichungsnummer: **0 218 107**
**B1**

(12) ## EUROPÄISCHE PATENTSCHRIFT

(45) Veröffentlichungstag der Patentschrift:
**12.12.90**

(51) Int. Cl.⁵: **G02F 1/133**, G09F 9/35

(21) Anmeldenummer: **86112362.8**

(22) Anmeldetag: **06.09.86**

(54) **Flüssigkristallanzeige.**

(30) Priorität: **12.09.85 DE 3532485**

(43) Veröffentlichungstag der Anmeldung:
**15.04.87 Patentblatt 87/16**

(45) Bekanntmachung des Hinweises auf die Patenterteilung:
**12.12.90 Patentblatt 90/50**

(84) Benannte Vertragsstaaten:
**BE DE FR GB IT NL**

(56) Entgegenhaltungen:
**US-A- 4 228 574**

**Patent Abstracts of Japan, unexamined applications,
Sektion E, Band 3, Nr. 146, 4. Dezember 1979,
Patent Abstracts of Japan, unexamined applications,
Sektion P, Band 7, Nr. 184, 13. August 1983**

(73) Patentinhaber: **Nokia Unterhaltungselektronik
(Deutschland) GmbH, Östliche
Karl-Friedrich-Strasse 132, D-7530 Pforzheim(DE)**

(72) Erfinder: **Zondler, Rolf, Dr., Marabustrasse 26,
D-7000 Stuttgart 50(DE)**
Erfinder: **Pottharst, Jürgen, Dr., Onstmettinger Weg 9,
D-7000 Stuttgart 80(DE)**

## Beschreibung

Die Erfindung bezieht sich auf ein Verfahren zum Herstellen einer Flüssigkristallanzeige gemäß dem Oberbegriff des Anspruchs 1.

Aus dem US-Patent 4 228 574 ist eine Flüssigkristallanzeige bekannt, bei der die den Flüssigkristall einschließenden Substrate aus transparenten Folien aus Kunststoff bestehen. Für eine kontinuierliche Fertigung werden zwei Folienbahnen von zwei Rollen abgezogen und dann jeweils mit transparenten Elektroden der anzuzeigenden Zeichen versehen. Danach wird den Oberflächen der Folienbahnen durch Reiben in eine einzige Richtung eine parallele Orientierung aufgezwungen. Auf die eine Folienbahn werden dann um die Elektroden für die jeweiligen Zeichen Rahmen aufgesetzt und diese gleich oder nach dem Aufbringen der zweiten Folienbahn auf die Rahmen mit den Flüssigkristallen gefüllt. Es kann nun noch auf die eine Folienbahn ein Polarisator und auf die andere Folienbahn ein Reflektor aufgebracht werden. Danach erfolgt eine Prüfung der Flüssigkristallanzeigen und nachfolgend die Aufteilung in die einzelnen Anzeigen. Bei diesem bekannten Verfahren zum Herstellen von Flüssigkristallanzeigen werden zweimal die Einrichtungen zum Aufbringen der Elektroden und der parallelen Orientierung der Oberflächen der Folienbahnen benötigt.

Der Erfindung liegt die Aufgabe zugrunde, ein einfacheres Verfahren zum Herstellen von Flüssigkristallanzeigen aus Folien anzugeben.

Die Lösung dieser Aufgabe erfolgt mit den im Anspruch 1 angegebenen Verfahrensschritten.

Die Erfindung wird nun anhand von dem in den Figuren gezeigten Ausführungsbeispiel näher erläutert. Es zeigen:

Fig. 1 den Querschnitt durch eine Flüssigkristallanzeige und

Fig. 2 schematisch den Fertigungsschritt, in dem die Folien übereinandergelegt werden.

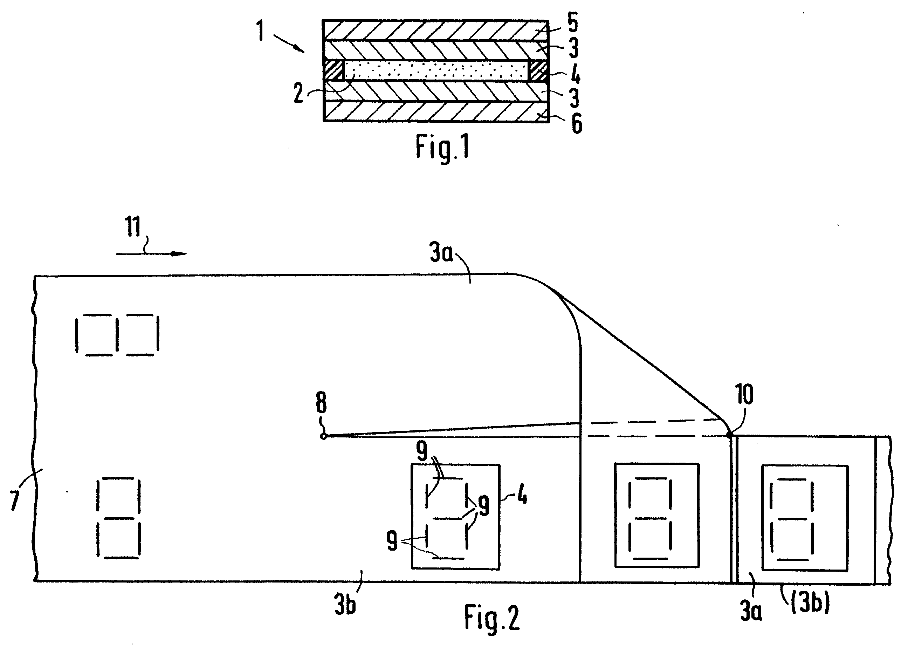

Bei der in Fig. 1 dargestellten Flüssigkristallanzeige 1 wird der Flüssigkristall 2 von zwei Substraten eingeschlossen, die aus transparenten Folien 3 aus Kunststoff bestehen. Die Folien 3 sind über einen Rahmen 4 miteinander verbunden. Auf der Oberseite der Flüssigkristallanzeige 1 kann ein Polarisator 5 und auf der Unterseite ein polarisierender Reflektor 6 angebracht sein. Der polarisierende Reflektor 6 kann auch aus einem Polarisator bestehen, wenn die Flüssigkristallanzeige 1 im Transmissionsbetrieb benutzt wird. Der bisher geschilderte Aufbau der Flüssigkristallanzeige 1 und die verwendeten Materialien sind bekannt und werden hier deswegen nicht näher erläutert.

Zum Herstellen der Flüssigkristallanzeigen mit Folien wird von einer einzigen Rolle (nicht dargestellt) eine Folienbahn 7 abgezogen, auf die in bekannter Weise transparente Elektroden entsprechend den später anzuzeigenden Zeichen aufgebracht werden. Anschließend wird die Oberfläche der Folienbahn mit einer parallelen Orientierung versehen. Eine derart bearbeitete Folienbahn 7 ist in der Fig. 2 links dargestellt, die in Richtung des Pfeiles 11 bewegt wird. Am Punkt 8 wird diese Folienbahn 7 in zwei Folien 3a und 3b geteilt. Auf die Folie 3b wird um die jeweils zusammengehörenden Elektroden 9 der Rahmen 4 angebracht. Die Folie 3a wird um 90° gedreht und derart von oben auf die Folie 3b geklappt, daß die zusammengehörenden Elektroden zueinander ausgerichtet sind. Am Punkt 10 wird dann die Folie 3a entlang dem Rand der Folie 3b durchgeschnitten und das nächste Stück der Folie 3a in beschriebener Weise auf die nachfolgende Folie 3b gelegt. Wenn nach dem Aufsetzen des Rahmens 4 auf die Folie 3b dieser mit dem Flüssigkristall 2 gefüllt wurde, dann erfolgt das dichte Verschließen der Folien 3a und 3b mit dem Rahmen 4 dort, wo die Folie 3a auf die Folie 3b gelegt wird. Wenn der Flüssigkristall 2 erst nach dem Verfahrensschritt des Auflegens der Folie 3a auf die Folie 3b eingefüllt wird, wird die Folie 3a beim Auflegen auf die Folie 3b bis auf ein Einfülloch verschlossen und der Flüssigkristall in einer nachfolgenden Stufe in den Rahmen 4 gefüllt. Es kann nun die Prüfung der Flüssigkristallanzeigen und anschließend die Aufteilung in die einzelnen Anzeigen erfolgen.

## Patentansprüche

1. Verfahren zum Herstellen einer Flüssigkristallanzeige unter Verwendung von Folien mit Elektroden und mit einer parallelen Orientierung ihrer Oberflächen, bei dem auf der einen Folie Rahmen angebracht werden und danach eine andere Folie auf die mit Rahmen versehene Folie gelegt wird, anschließend diese Teile vor oder nach dem Einbringen der Flüssigkristalle in die Rahmen dicht miteinander verbunden werden und danach eine Aufteilung in einzelne Flüssigkristallanzeigen erfolgt, **dadurch gekennzeichnet**, daß eine einzige, von einer Rolle abgewickelte Folienbahn (7) verwendet wird, die vor dem Anbringen der Rahmen (4) in zwei Folien (3a, 3b) unterteilt wird, und daß die zweite Folie (3b) nach dem Anbringen der Rahmen (4) auf die erste Folie (3a) um 90° gedreht auf diese geklappt wird.

## Claims

1. Process for producing a liquid-crystal display, using films with electrodes and with a parallel orientation of their surfaces, in which on one film frames are affixed, and then another film is laid on the film provided with frames; subsequently, before or after insertion of the liquid crystals into the frames, these parts are linked closely together, after which the assembly is divided into individual liquid-crystal displays, the distinguishing features being that a single roll of film (7) wound off a reel is used, being divided into two films (3a, 3b) before attachment of the frames (4), and that the second film (3b), after attachment of the frames (4) to the first film (3a), is turned by 90° before being positioned on this latter.

## Revendications

1. Procédé pour la fabrication d'un affichage à cristaux liquides en utilisant des feuilles à électrodes et à orientation parallèle de leurs surfaces dans lequel l'une des feuilles est pourvue de cadres et l'autre feuille est ensuite possée sur la feuille pourvue de cadres suite à quoi ces éléments sont étroitement reliés entre eux avant ou après l'introduction des cristaux liquides dans les cadres, opération suivie d'une division en affichages à cristaux liquides individuels, caractérisé en ce qu'il est utilisé une seule bande de feuille (7) déroulée d'un rouleau qui, avant de poser les cadres (4), est divisée en deux feuilles (3a, 3b) et que la deuxième feuille (3b) est repliée, tournée de 90°, sur la première feuille (3a) après avoir apposé les cadres (4).

Fig.1

Fig.2